# EUROPÄISCHE PATENTSCHRIFT

(11) **EP 2 801 174 B1**
(45) Veröffentlichungstag und Bekanntmachung des Hinweises auf die Patenterteilung: **06.04.2016**
(21) Anmeldenummer: 13724152.7
(22) Anmeldetag: 19.04.2013
(51) Int. Cl.: H04L 12/417, G06F 11/00, H04L 12/40

(54) **VERFAHREN UND VORRICHTUNG ZUR KONSISTENTEN ÄNDERUNG DER ZEITPLÄNE IN EINER ZEITGESTEUERTEN VERMITTLUNG**
METHOD AND DEVICE FOR CONSISTENT CHANGING THE SCHEDULES IN A TIME TRIGGERED SWITCH
DISPOSITIF ET PROCÉDÉ DE CHANGEMENT CONSISTENT DE DANS UN COMMUTATEUR SYNCHRONE ET DETERMINISTE

(30) Priorität: 19.04.2012 AT 4752012
(43) Veröffentlichungstag der Anmeldung: 12.11.2014
(73) Patentinhaber: FTS Computertechnik GmbH, 1040 Wien (AT)
(72) Erfinder: POLEDNA, Stefan, A-3400 Klosterneuburg (AT); ANGELOW, Harald, 1140 Wien (AT); STEINER, Wilfried, A-1040 Wien (AT); SCHWARZ, Martin, A-2700 Wiener Neustadt (AT)
(74) Vertreter: Patentanwaltskanzlei Matschnig & Forsthuber OG
(86) Internationale Anmeldenummer: PCT/AT2013/050095
(87) Internationale Veröffentlichungsnummer: WO 2013/155548

(56) Entgegenhaltungen:
- EP-A1- 2 337 271
- US-A1- 2011 066 854
- ROBERT BRENDLE ET AL: "Dynamic Reconfiguration of FlexRay Schedules for Response Time Reduction in Asynchronous Fault-Tolerant Networks", 25. Februar 2008 (2008-02-25), ARCHITECTURE OF COMPUTING SYSTEMS Â ARCS 2008; [LECTURE NOTES IN COMPUTER SCIENCE], SPRINGER BERLIN HEIDELBERG, BERLIN, HEIDELBERG, PAGE(S) 117 - 129, XP019086859, ISBN: 978-3-540-78152-3 Absatz [04.2] - Absatz [04.4]; Abbildungen 2,5,6
- ELMENREICH W ED - FAHMY S ET AL: "Time-Triggered Fieldbus Networks State of the Art and Future Applications", OBJECT ORIENTED REAL-TIME DISTRIBUTED COMPUTING (ISORC), 2008 11TH IEEE INTERNATIONAL SYMPOSIUM ON, IEEE, PISCATAWAY, NJ, USA, 5. Mai 2008 (2008-05-05), Seiten 436-442, XP031264402, ISBN: 978-0-7695-3132-8
- KLOBEDANZ K ET AL: "A reconfiguration approach for fault-tolerant FlexRay networks", DESIGN, AUTOMATION&TEST IN EUROPE CONFERENCE&EXHIBITION (DATE), 2011, IEEE, 14. März 2011 (2011-03-14), Seiten 1-6, XP032318115, DOI: 10.1109/DATE.2011.5763022 ISBN: 978-1-61284-208-0

## Beschreibung

Die Erfindung betrifft ein Verfahren zur dynamischen Änderung der Zeitpläne in einem zeitgesteuerten Switch zur Vermittlung von zeitgesteuerten Nachrichten in einem Echtzeitcomputersystem,

Die vorliegende Erfindung liegt im Bereich der Computertechnik. Sie beschreibt ein innovatives Verfahren, wie in einem zeitgesteuerten Echtzeitsystem die Zeitpläne in einem Kommunikationssystem konsistent geändert werden können.

In einem verteilten Echtzeitsystem, z.B. dem *smart Grid,* in dem periodische Sensordaten über lange physikalische Distanzen übertragen werden müssen, bestimmt die Übertragungsdauer zwischen den dezentralen Subsystemen und einer zentralen Warte zu einem wesentlichen Teil die Totzeit eines über ein Kommunikationssystem geschlossenen Regelkreises und damit die Qualität der Regelung. Die Übertragungszeiten können minimiert werden, wenn in einem zeitgesteuerten Netzwerk die Zeitpunkte der Datenerfassung, der Übertragung, der Vermittlung durch die Switches, und der Verarbeitung unter Verwendung eines auf einer globalen Zeit beruhenden Zeitplans derart synchronisiert sind, dass im Kommunikationssystem keine Wartezeiten der Nachrichten auftreten. Ein *Zeitplan* gibt an, zu welchen periodisch wiederkehrenden Zeitpunkten eine zeitgesteuerte Aktion, z.B. das Senden einer Nachricht von einem Switch, auszuführen ist.

Wenn nun in einer verteilten Anlage wie dem *smart Grid* eine Anomalie auftritt, so ist es oft notwendig, das entfernte Subsystem, in dem die Anomalie aufgetreten ist, genauer zu beobachten. Zu diesem Zweck muss der gegenwärtig *aktive Zeitplan* der Übertragung durch einen *neuen Zeitplan* ersetzt werden, der die genaue Beobachtung des Subsystems, in dem die Anomalie aufgetreten ist, ermöglicht. In diesem neuen Zeitplan müssen die kritischen Regelkreise, die zur Aufrechterhaltung der Netzqualität erforderlich sind, weiter kontinuierlich unterstützt werden.

Wir bezeichnen eine Umschaltung von einem aktiven Zeitplan zu einen neuen Zeitplan als *konsistent,* wenn alle kritischen Zeitanforderung an das Kommunikationssystem im neuen Zeitplan erfüllt sind und wenn im Rahmen der Umschaltung kein *Phasensprung* (engl. *phase shiƒt*) einer periodischen Nachricht, die sowohl im aktiven wie auch im neuen Zeitplan gesendet wird, auftritt.

Wenn die Umschaltung *inkonsistent* ist, so kann in der Anwendung ein Fehler auftreten der zumindest die Qualität der Anwendung beeinträchtigt. Wenn z.B. in einem verteilten Multimedia System, in dem Audio- und Videosignale übertragen werden, die Umschaltung von einer Kamera auf eine andere Kamera zu einem Phasensprung im Audiosignal führt, so tritt in der akustischen Wiedergabe ein kurzzeitiger Fehler auf, der die Qualität der Audiowiedergabe herabsetzt.

Es ist eine Aufgabe der Erfindung, ein Verfahren offenzulegen, wie in einem verteilten zeitgesteuerten Echtzeitsystem neue Zeitpläne für die zeitgesteuerten Switches generiert werden können, und wie konsistente Umschaltzeitpunkte gefunden werden können zu denen diese neuen Zeitpläne aktiviert werden müssen, damit das Gesamtsystem harmonisch vom aktiven Zeitplan in den neuen Zeitplan übergeführt werden kann.

Diese Aufgabe wird mit einem eingangs erwähnten Verfahren dadurch gelöst, dass erfindungsgemäß zu einem Zeitpunkt in einem Switch mindestens ein aktiver Zeitplan und zumindest ein neuer Zeitplan gespeichert sind, wobei zu einem festgelegten Umschaltzeitpunkt im aktiven Intervall einer *sparse time base* der aktive Zeitplan deaktiviert und ein neuer Zeitplan aktiviert wird.

Durch die Umschaltung im aktiven Intervall der sparse time base erfolgt in den Switches eine konsistente Umschaltung auf einen neuen Zeitplan.

Die in der Literatur beschriebenen Verfahren zur Erstellung von Zeitplänen für zeitgesteuerte Kommunikationssysteme [3-5] gehen auf die Schaffung eines konsistenten Umschaltzeitpunkts von Zeitplänen nicht ein. Offenbarung [10] offenbart den Oberbegriff von Anspruch 1. Dokumente [11] und [12] offenbaren weiteren relevanten Stand der Technik.

Die vorliegende Erfindung legt ein innovatives Verfahren offen, wie in einem verteilten zeitgesteuerten Echtzeitsystem neue Zeitpläne für die zeitgesteuerten Switches generiert werden können, und wie konsistente Umschaltzeitpunkte gefunden werden können zu denen diese neuen Zeitpläne aktiviert werden müssen, damit das Gesamtsystem harmonisch vom aktiven Zeitplan in den neuen Zeitplan übergeführt werden kann.

Weiters betrifft die Erfindung einen Switch (Verteileinheit) zur Verwendung in einem oben beschriebenen Verfahren, wobei der Switch dazu eingerichtet ist, zu einem festgelegten Umschaltzeitpunkt im aktiven Intervall einer *sparse time base* einen aktiven Zeitplan zu deaktivieren und einen neuen Zeitplan zu aktivieren.

Außerdem betrifft die Erfindung ein Echtzeitsystem zum Durchführen eines oben beschriebenen Verfahrens.

Weitere vorteilhafte Ausgestaltungen der Erfindung und insbesondere des erfindungsgemäßen Verfahrens sind wie folgt beschrieben, die zusätzlich, alternativ oder in beliebiger Kombination miteinander realisiert sein können. Dabei kann vorgesehen sein, dass
*) während im Switch ein aktiver Zeitplan exekutiert wird, ein neuer passiver Zeitplan geladen wird;
*) in einer Menge von zusammenhängenden Switches alle Switches auf eine gemeinsame globale Zeitbasis bekannter Präzision zugreifen;
*) die gemeinsame globale Zeitbasis fehlertolerant ist;
*) zeitgesteuerte Aktionen im Switch nur während der aktiven Phasen der *globalen sparse* Zeitbasis vorgenommen werden;
*) ein dynamischer on-line Scheduler aufgrund der Anforderung eines Users einen neuen Zeitplan errechnet;
*) der neue Zeitplan unter Verwendung von kryptographischen Protokollen zur Sicherung der Authentizität und Integrität des neuen Zeitplans von einem System, das den Zeitplan generiert, in den Switch geladen wird;
*) der Scheduler (160) als TMR System implementiert ist, wobei ein Switch eine Umschaltung nur vornimmt, wenn mindestens zwei von drei vom TMR System empfangenen Nachrichten identisch sind;
*) im Switch die Zeitpläne unter Verwendung von fehlerkennenden Codes gespeichert sind;
*) im Switch die Zeitpläne unter Verwendung von fehlerkorrigierenden Codes gespeichert sind;
*) in einem Zeitplan die Phasen von Nachrichten, die über mehrere Switches laufen, unter Verwendung der globalen Zeit so synchronisiert sind, dass eine minimale *end*-*to*-*end* Transportzeit der Nachricht durch das gesamt Kommunikationssystem erreicht wird;
*) die unterschiedlichen Perioden in einem Zeitplan in einem harmonischen Verhältnis zueinander stehen, so dass die längste Periode das kleinste gemeinsame Vielfache aller Perioden ist;
*) eine ausgezeichnete Periode der Menge harmonischer Perioden der physikalischen Sekunde entspricht;
*) eine ausgezeichnete Periode der Menge harmonischer Perioden exakt einem Zeitintervall entspricht, das durch eine Anwendung vorgegeben ist;
*) in einer Menge von zusammenhängenden Switches, die über eine gemeinsame globale Zeitbasis verfügen, die Umschaltzeitpunkte der Zeitpläne in allen Switches gleichzeitig sind;
*) die Umschaltzeitpunkte so gewählt werden, dass bei Nachrichten, die im aktiven und neuen Zeitplan mit der gleichen Periode auftreten, durch das Umschalten kein Phasensprung verursacht wird;
*) der Switch überprüft, ob in einem neuen Zeitplan als sicherheitskritisch eingestufte Nachrichten entsprechend den sicherheitskritischen Anforderungen eingeplant sind und, falls dies nicht der Fall ist, der Switch keine Umschaltung vom aktiven zum neuen Zeitplan vornimmt und eine Fehlermeldung an ein Diagnosesystem sendet;
*) die Nachrichten dem SAE Standard AS6802 von TT Ethernet entsprechen;
*) die Nachrichten dem IEEE Standard 1588 *for Precision Clock Synchronization* entsprechen.

Die vorliegende Erfindung ist im Folgenden wird an Hand Zeichnung näher erklärt. In dieser zeigt
Fig. 1 die Struktur eines verteilten Echtzeitsystems mit fünf Endsystemen und zwei Switches, und
Fig. 2 zeigt eine zyklische Darstellung des Fortschreitens der Echtzeit.

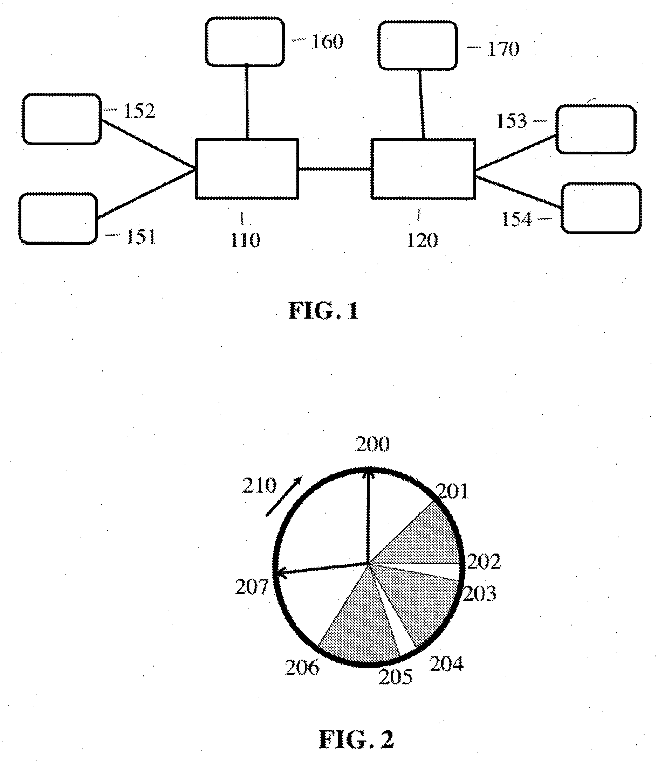

Fig. 1 zeigt ein zeitgesteuertes Echtzeitsystem mit zwei zeitgesteuerten Switches **110** und **120,** vier Endsystemen **151, 152, 153, 154,** einem Scheduler System **160** zur Berechnung neuer Zeitpläne und einem Diagnosesystem **170.** Alle Systeme sind über die in Fig. 1 eingetragenen bidirektionale Leitungen zur Übertragung von zeitgesteuerten und ereignisgesteuerten Ethernet Nachrichten entsprechend dem TTEthernet Standard [7] verbunden. Entsprechend diesem Standard können in einem Echtzeitkommunikationssystem zeitgesteuerte (*time-triggered, TT*) und ereignisgesteuerte (*event*-*triggered*, *ET*) Ethernet Nachrichten übertragen werden. Alle Systeme der Fig. 1 haben Zugriff auf eine fehlertolerante globale Zeitbasis bekannter Präzision. Diese Zeitbasis wird entsprechend dem IEEE Standard 1588 *ƒor Precision Clock Synchronisation* aufgebaut. Mittels dieser Zeitbasis wird im Gesamtsystem eine *sparse time* (wie in [6, S.62-65] ausführlich beschrieben) eingerichtet, damit alle im System in den aktiven Zeitintervallen der *sparse time* gesetzten Ereignisse konsistent geordnet werden können. Erfindungsgemäß werden zeitgesteuerte Aktionen im Gesamtsystem nur in den aktiven Intervallen der *sparse time* vorgenommen.

In den Switches **110** und **120** befinden sich während des Betriebs zu einem beliebigen Zeitpunkt jeweils ein *aktiver* und ein, zwei oder mehr *neue* Zeitpläne. Bevor ein neuer Zeitplan aktiviert wird, ist er *passiv* und spielt im Ablauf der gegenwärtigen Kommunikation keine Rolle.

Fig. 2 veranschaulicht eine zyklische Darstellung des Fortschreitens der Echtzeit. In dieser Darstellungsform wird das Fortscheiten der Echtzeit in der Form von Perioden und Phasen dargestellt. In Fig. 2 schreitet die Zeit im Uhrzeigersinn **210** voran. Der Beginn einer Periode ist zum Zeitpunkt **200** mit der globalen Zeit synchronisiert. Ein Ereignis, das innerhalb einer Periode auftritt (z.B. das Ereignis **201**) wird durch die Angabe des Winkels, d.i. die *Phase,* zwischen dem Beginn der Periode **200** und dem Ereignis **201** charakterisiert. Wenn die Zeit eine volle Periode-d.i. einen Winkel von 360 Grad-durchlaufen hat, so beginnt die *Folgeperiode.* In der Folgeperiode haben die zeitgesteuerten Aktionen die gleiche Phase wie in der vorangegangenen Periode. Ein *Phasensprung* tritt auf, wenn die Phase einer periodischen Aktion in der Folgeperiode anders ist als in der vorangegangenen Periode. Das zyklische Bild des Fortschreitens der Echtzeit eignet sich besonders gut, um periodische Prozesse, wie sie in zeitgesteuerten Echtzeitsystemen auftreten, darzustellen.

Im Folgenden wird der Transport einer Nachricht vom Endsystem **151** zum Endsystem **153** der Fig. 1 betrachtet. Wenn das Endsystem **151** zum Zeitpunkt **200** Prozessdaten erfasst, so dauert die Vorverarbeitung der Daten im System **151** bis zum Zeitpunkt **201.** Zum Zeitpunkt **201** wird eine Nachricht mit den zum Zeitpunkt **200** vom System **151** erfassten Prozessdaten an den Switch **110** gesendet. Diese Nachricht trifft zum Zeitpunkt **202** beim Switch **110** ein. Sie wird vom Switch **110** zum Zeitpunkt **203** an die Zieladresse über den Switch **120** weitergeleitet. Die Nachricht trifft zum Zeitpunkt **204** beim Switch **120** ein und wird vom Switch **120** zum Zeitpunkt **205** an das Endsystem **153** weitergeleitet. Die Nachricht trifft zum Zeitpunkt **206** beim Endsystem **153** ein, wird dort überprüft, und zum Zeitpunkt **207** wird ein neuer Stellwert an den Prozess ausgegeben. Im diesem Beispiel bestimmt das Zeitintervall von **200** bis **207** den durch das verteilte Computersystem bedingten Teil der Totzeit. Durch die Synchronisation der Ereignisse des Sendens und Empfangens der Nachrichten in einem zeitgesteuerten Kommunikationssystem und die a priori Bereitstellung der erforderlichen Kapazität der Kommunikationskanäle werden die *end-to-end Transportzeiten* der Nachrichten minimiert und Wartezeiten im Kommunikationssystem verhindert. In den nicht durch die grauem Flächen der Fig. 2 belegten Zeitintervallen können im Kommunikationssystem andere Nachrichten, z.B. ET Nachrichten, transportiert werden.

Wenn von einem Endbenutzer gewünscht wird, zusätzlich andere Echtzeitdaten zu übertragen, so sendet der Endbenutzer mittels einer ET Nachricht einen entsprechenden Auftrag an den Scheduler **160.** Der Scheduler **160** erstellt neue Zeitpläne und sendet diese in einer kryptographisch gesicherten ET Nachricht an die Switches **110** und **120.** Die Switches **110** und **120** überprüfen diese Nachrichten um ihre *Authentizität* und *Integrität* sicherzustellen und aktivieren den neuen Zeitplan zu einem vom Scheduler **160** genau vorbestimmten Umschaltzeitpunkt. Im vorliegenden Beispiel der Fig. 2 bietet sich der Zeitpunkt **200** als Umschaltzeitpunkt an, da zu diesem Umschaltzeitpunkt **200** eine neue Periode beginnt. Erfindungsgemäß kann ein neuer Zeitplan auch vorab im Switch gespeichert werden. Der Scheduler **160** bestimmt dann nur den genauen Umschaltzeitpunkt vom aktiven Zeitplan auf den neuen Zeitplan. Der Scheduler **160** kann als TMR System [6, S.135] implementiert werden, so dass ein Switch im fehlerfreien Fall drei identische neue Zeitpläne mit den identischen Umschaltzeitpunkten kryptographisch gesichert erhält. Ein Switch nimmt die geplante Umschaltung nur vor, wenn mindestens zwei der drei Zeitpläne identischen Inhalt haben, um einen Fehler bei einer Zeitplanerstellung zu tolerieren.

Die Erstellung eines Zeitplans durch den Scheduler **160** wird wesentlich erleichtert und beschleunigt, wenn die unterschiedlichen Perioden in einem Zeitplan in einem harmonischen Verhältnis zueinander stehen [9, p.9], so dass die längste Periode das *kleinste gerneinsame Vielfache* aller Perioden ist. In einem solchen harmonischen Zeitplan ist *eine ausgezeichnete* Periode frei wählbar, wogegen alle anderen Perioden von dieser frei gewählten Periode abhängig sind. Erfindungsgemäß kann diese ausgezeichnete Periode die *physikalische Sekunde* oder ein *wichtiges Zeitintervall* sein, das durch die konkrete Anwendung vorgegeben ist.

Wenn in einem System einige Nachrichten in dem aktiven und neuen Zeitplan mit der gleichen Periode und der gleichen Phasenlage auftreten, so soll durch das Umschalten kein Phasensprung zwischen zwei dieser Nachrichten verursacht werden. Dies wird in einem harmonischen Zeitplan erreicht, wenn die Umschaltung zu Beginn der längsten Periode in allen Switches *gleichzeitig* erfolgt. Gleichzeitigkeit ist in einem System, das eine *sparse time* unterstützt, dann gegeben, wenn Aktionen innerhalb *desselben aktiven Intervalls der sparse time* ausgeführt werden. *Absolute Gleichzeitigkeit* von entfernten Aktionen kann in einem verteilten Computersystem prinzipiell nicht erreicht werden.

Wenn in einem System sicherheitskritische Nachrichten transportiert werden müssen, wobei die Perioden und Phasen dieser sicherheitskritischen Nachrichten im Rahmen einer Zertifizierung des Systems überprüft worden sind, so dürfen in keinem Zeitplan die Perioden und Phasen dieser sicherheitskritischen Nachrichten geändert werden. In einer solchen Situation überprüft der Switch, ob in einem neuen Zeitplan alle sicherheitskritischen Anforderungen an den Zeitplan erfüllt sind. Wenn dies nicht der Fall ist, nimmt der Switch keine Umschaltung vom aktiven zum neuen Zeitplan vor und sendet eine Fehlermeldung an das Diagnosesystem **170.**

Die Speicherung der aktiven und neuen Zeitpläne im Switch kann unter Verwendung von *ƒehlerkennenden* Codes oder *ƒehlerkorrigierenden* Codes erfolgen.

Das hier offen gelegte Verfahren zur konsistenten Umschaltung von Zeitplänen in einem verteilten zeitgesteuerten Echtzeitsystem verbessert die Flexibilität und Qualität, und damit das Anwendungsfeld der zeitgesteuerten Kommunikation und bringt daher große wirtschaftliche Vorteile.

Die vorliegende Erfindung legt ein innovatives Verfahren offen, wie in einem verteilten zeitgesteuerten Echtzeitsystem neue Zeitpläne für die zeitgesteuerten Switches generiert werden können, und wie konsistente Umschaltzeitpunkte gefunden werden können, zu denen diese neuen Zeitpläne aktiviert werden müssen, damit das Gesamtsystem harmonisch vom aktiven Zeitplan in den neuen Zeitplan übergeführt werden kann.

Zitierte Literatur:
[1] US 5694542 Kopetz, H. Time-triggered communication control unit and communication method. Granted December 2,1997.
[2] US 7,839,868. Kopetz, H. Communication method and system ƒor the transmission of time-driven and event-driven Ethernet messages. Granted November 23, 2010.
[3] US 20100220744, Ungerman, J., Intelligent Star Coupler ƒor time-triggered communication protocol and method ƒor communicating between nodes with a network using a time triggered protocol. Publication Date September 2, 2010.
[4] US 20060242252, Jiang, S., Extensible Scheduling of Messages on Time-Triggered Busses. Publication Date Oct 26, 2006.
[5] US 20110066854; Poledna, S., Method ƒor Secure Dynamic Bandwidth Allocation in TT Ethernet. Publication Date March 17, 2011
[6] Kopetz, H. Real-Time Systems, Design Principles ƒor Distributed Embedded Applications. Springer Verlag. 2011.
[7] SAE Standard AS6802 von TT Ethernet. URL: http://standards.sae.org/as6802
[8] IEEE 1588 Standard for a Precision Clock Synchronization Protocol for Network Measurement and Control Systems. URL: http://www.ieee1588.com/
[9] Kopetz, H., The complexity challenge in embedded system design, Proc. of ISORC, May 2008. pp. 3-12, IEEE Press.
[10] ROBERT BRENDLE ET AL: "Dynamic Reconfiguration of FlexRay Schedules for Response Time Reduction in Asynchronous Fault-Tolerant Networks", 25. Februar 2008 (2008-02-25), ARCHITECTURE OF COMPUTING SYSTEMS ARCS 2008; [LECTURE NOTES IN COMPUTER SCIENCE], SPRINGER BERLIN HEIDELBERG, BERLIN, HEIDELBERG, PAGE(S) 117 - 129, ISBN: 978-3-540-78152-3.
[11] ELMENREICH W ED - FAHMY S ET AL: "Time-Triggered Fieldbus Networks State of the Art and Future Applications", OBJECT ORIENTED REAL-TIME DISTRIBUTED COMPUTING (ISORC), 2008 11TH IEEE INTERNATIONAL SYMPOSIUM ON, IEEE, PISCATAWAY, NJ, USA, 5. Mai 2008 (2008-05-05), Seiten 436-442.
[12] KLOBEDANZ K ET AL: "A reconfiguration approach for fault-tolerant FlexRay networks", DESIGN, AUTOMATION&TEST IN EUROPE CONFERENCE8EXHIBITION (DATE), 2011, IEEE, 14. März 2011 (2011-03-14), Seiten 1-6, DOI: 10.1109/DATE.2011.5763022.

## Patentansprüche

1. Verfahren zur dynamischen Änderung der Zeitpläne in einem zeitgesteuerten Switch (110, 120) zur Vermittlung von zeitgesteuerten Nachrichten in einem Echtzeitcomputersystem, wobei
zu einem Zeitpunkt in einem Switch (110, 120) mindestens ein aktiver Zeitplan und zumindest ein neuer Zeitplan gespeichert sind, wobei zu einem Umschaltzeitpunkt im aktiven Intervall einer *sparse time base* der aktive Zeitplan deaktiviert und ein neuer Zeitplan aktiviert wird, **dadurch gekennzeichnet, dass** der Umschaltzeitpunkt ein festgelegter Umschaltzeitpunkt (200) ist.

2. Verfahren nach Anspruch 1, **dadurch gekennzeichnet, dass,** während im Switch (110, 120) ein aktiver Zeitplan exekudert wird, ein neuer passiver Zeitplan geladen wird.

3. Verfahren nach Anspruch 1, **dadurch gekennzeichnet, dass** in einer Menge von zusammenhängenden Switches alle Switches auf eine gemeinsame globale Zeitbasis bekannter Präzision zugreifen.

4. Verfahren nach einem der Ansprüche 1 bis 3, **dadurch gekennzeichnet, dass** die gemeinsame globale Zeitbasis fehlertolerant ist.

5. Verfahren nach einem der Ansprüche 1 bis 4, **dadurch gekennzeichnet, dass** zeitgesteuerte Aktionen im Switch nur während der aktiven Phasen der *globalen sparse* Zeitbasis vorgenommen werden.

6. Verfahren nach einem der Ansprüche 1 bis **5, dadurch gekennzeichnet, dass** ein dynamischer on-line Scheduler (160) aufgrund der Anforderung eines Users einen neuen Zeitplan errechnet.

7. Verfahren nach einem der Ansprüche 1 bis 6, **dadurch gekennzeichnet, dass** der neue Zeitplan unter Verwendung von kryptographischen Protokollen zur Sicherung der Authentizität und Integrität des neuen Zeitplans von einem System, das den Zeitplan generiert, in den Switch geladen wird.

8. Verfahren nach Anspruch 6 oder 7, **dadurch gekennzeichnet, dass** der Scheduler (160) als Triple Modular Redundancy TMR, System implementiert ist, wobei ein Switch eine Umschaltung nur vornimmt, wenn mindestens zwei von drei vom TMR System empfangenen Nachrichten identisch sind.

9. Verfahren nach einem der Ansprüche 1 bis 8, **dadurch gekennzeichnet, dass** im Switch die Zeitpläne unter Verwendung von fehlerkennenden und/oder fehlerkorrigierenden Codes gespeichert sind.

10. Verfahren nach einem der Ansprüche 1 bis 9, **dadurch gekennzeichnet, dass** in einem Zeitplan die Phasen von Nachrichten, die über mehrere Switches laufen, unter Verwendung der globalen Zeit so synchronisiert sind, dass eine minimale *end*-*to*-*end* Transportzeit der Nachricht durch das gesamt Kommunikationssystem erreicht wird.

11. Verfahren nach einem der Ansprüche 1 bis 10, **dadurch gekennzeichnet, dass** die unterschiedlichen Perioden in einem Zeitplan in einem harmonischen Verhältnis zueinander stehen, so dass die längste Periode das kleinste gemeinsame Vielfache aller Perioden ist.

12. Verfahren nach einem der Ansprüche 1 bis 11, **dadurch gekennzeichnet, dass** eine ausgezeichnete Periode der Menge harmonischer Perioden der physikalischen Sekunde entspricht.

13. Verfahren nach einem der Ansprüche 1 bis 12, **dadurch gekennzeichnet, dass** eine ausgezeichnete Periode der Menge harmonischer Perioden exakt einem Zeitintervall entspricht, das durch eine Anwendung vorgegeben ist.

14. Verfahren nach einem der Ansprüche 1 bis 13, **dadurch gekennzeichnet, dass in** einer Menge von zusammenhängenden Switches, die über eine gemeinsame globale Zeitbasis verfügen, die Umschaltzeitpunkte der Zeitpläne in allen Switches gleichzeitig sind.

15. Verfahren nach einem der Ansprüche 1 bis 14, **dadurch gekennzeichnet, dass** die Umschaltzeitpunkte so gewählt werden, dass bei Nachrichten, die im aktiven und neuen Zeitplan mit der gleichen Periode auftreten, durch das Umschalten kein Phasensprung verursacht wird.

16. Verfahren nach einem der Ansprüche 1 bis 15, **dadurch gekennzeichnet, dass** der Switch überprüft, ob in einem neuen Zeitplan als sicherheitskritisch eingestufte Nachrichten entsprechend den sicherheitskritischen Anforderungen eingeplant sind und, falls dies nicht der Fall ist, der Switch keine Umschaltung vom aktiven zum neuen Zeitplan vornimmt und eine Fehlermeldung an ein Diagnosesystem sendet.

17. Verfahren nach einem der Ansprüche 1 bis 16, **dadurch gekennzeichnet, dass** die Nachrichten dem SAE Standard AS6802 von TT Ethernet entsprechen, oder die Nachrichten dem IEEE Standard 1588 *for Precision Clock Synchronization* entsprechen.

18. Switch zur Verwendung in einem Verfahren nach einem der Ansprüche 1 bis 17, wobei der Switch dazu eingerichtet ist, zu einem festgelegten Umschaltzeitpunkt im aktiven Intervall einer *sparse time base* einen aktiven Zeitplan zu deaktivieren und einen neuen Zeitplan zu aktivieren.

19. Echtzeitsystem zum Durchführen eines Verfahrens nach einem der Ansprüche 1 bis 17.

## Claims

1. A method for the dynamic modification of the schedules in a time-controlled switch for relaying time-controlled messages in a real-time computer system, wherein at least one active schedule and at least one new schedule are stored at a point of time in a switch (110, 120), wherein, at a specified changeover time in the active interval of a *sparse time base,* the active schedule is deactivated and a new schedule is activated,
**characterised in that**
the changeover point in time is a defined changeover point in time (200).

2. The method according to Claim 1, **characterised in that** a new passive schedule is loaded whilst an active schedule is executed in the switch (110,120).

3. The method according to Claim 1, **characterised in that** in a number of connected switches, all switches access a common global time base of known precision.

4. The method according to one of Claims 1 to 3, **characterised in that** the common global time base is fault-tolerant.

5. The method according to one of Claims 1 to 4, **characterised in that** time-controlled actions in the switch are performed only during the active phases of the *global sparse* time base.

6. The method according to one of Claims 1 to 5, **characterised in that** a dynamic on-line scheduler (160) generates a new schedule on the basis of the requirement of a user.

7. The method according to one of Claims 1 to 6, **characterised in that** the new schedule is loaded into the switch with use of cryptographic protocols to secure the authenticity and integrity of the new schedule by a system that generates the schedule.

8. The method according to one of Claims 1 to 7, **characterised in that** the scheduler (160) is implemented as a Triple Modular Redundancy, TMR, system, wherein a switch only performs a changeover when at least two of three messages received by the TMR system are identical.

9. The method according to one of Claims 1 to 8, **characterised in that** the schedules are stored in the switch with use of fault-identifying and/or fault-correcting codes.

10. The method according to one of Claims 1 to 9, **characterised in that** the phases of messages that run via a number of switches are synchronised in a schedule with use of the global time, such that a minimal *end-to-end* transport time of the message through the entire communication system is achieved.

11. The method according to one of Claims 1 to 10, **characterised in that** the different periods in a schedule are arranged in a harmonic relationship relative to one another such that the longest period is the smallest common multiple of all periods.

12. The method according to one of Claims 1 to 11, **characterised in that** a distinguished period of the number of harmonic periods corresponds to the physical second.

13. The method according to one of Claims 1 to 12, **characterised in that** a distinguished period of the quantity of harmonic periods corresponds exactly to an interval that is predefined by an application.

14. The method according to one of Claims 1 to 13, **characterised in that** in a number of connected switches that have a common global time base, the changeover points in time of the schedules in all switches are simultaneous.

15. The method according to one of Claims 1 to 14, **characterised in that** the changeover points in time are selected such that, with messages that occur in the active and new schedule with the same period, no phase shift is caused by the changeover.

16. The method according to one of Claims 1 to 15, **characterised in that** the switch checks whether, in a new schedule, messages classified as safety-critical are included in accordance with the safety-critical requirements, and, if this is not the case, the switch does not perform a changeover from the active to the new schedule and transmits a fault message to a diagnosis system.

17. The method according to one of Claims 1 to 16, **characterised in that** the messages correspond to the SAE standard AS6802 of TT Ethernet or the messages correspond to the IEEE Standard 1588 *for precision clock synchronisation.*

18. A switch for use in a method according to one of Claims 1 to 17, wherein the switch is configured to deactivate an active schedule and to activate a new schedule at a specified changeover time in the active interval of a *sparse time base.*

19. A real-time system for carrying out a method according to one of Claims 1 to 17.

## Revendications

1. Procédé de modification dynamique des programmes dans un commutateur commandé en temps (110, 120) destiné à transmettre des messages commandés en temps dans un système informatique en temps réel, dans lequel au moins un programme actif et au moins un nouveau programme sont stockés à un moment dans un commutateur (110, 120), le programme actif étant désactivé et un nouveau programme étant activé à un moment de commutation dans l'intervalle actif d'une *base de temps distribuée* (*« sparse time base* »), **caractérisé par le fait que** le moment de commutation est un moment de commutation (200) défini.

2. Procédé selon la revendication 1, **caractérisé par le fait que,** pendant qu'un programme actif est exécuté dans le commutateur (110, 120), un nouveau programme passif est chargé.

3. Procédé selon la revendication 1, **caractérisé par le fait que,** dans un ensemble de commutateurs reliés entre eux, tous les commutateurs ont accès à une base de temps globale commune de précision connue.

4. Procédé selon l'une des revendications 1 à 3, **caractérisé par le fait que** la base de temps globale commune est tolérante aux erreurs.

5. Procédé selon l'une des revendications 1 à 4, **caractérisé par le fait que** des actions commandées dans le temps sont effectuées dans le commutateur uniquement pendant la phase active de la base de temps *distribuée globale* (« *globalen sparse »*).

6. Procédé selon l'une des revendications 1 à 5, **caractérisé par le fait qu**'un ordonnanceur en ligne dynamique (160) calcule un nouveau programme en raison de la demande d'un utilisateur.

7. Procédé selon l'une des revendications 1 à 6, **caractérisé par le fait que** le nouveau programme est chargé dans le commutateur par utilisation de protocoles cryptographiques pour garantir l'authenticité et l'intégrité du nouveau programme d'un système, lequel génère le programme.

8. Procédé selon l'une des revendications 6 ou 7, **caractérisé par le fait que** l'ordonnanceur (160) est mis en oeuvre en tant que système à Redondance TriModulaire, TMR, dans lequel un commutateur effectue une commutation uniquement lorsqu'au moins deux parmi trois messages reçus par le système TMR sont identiques.

9. Procédé selon l'une des revendications 1 à 8, **caractérisé par le fait que** les programmes sont stockés dans le commutateur par utilisation de codes d'identification d'erreurs et/ou de correction d'erreurs.

10. Procédé selon l'une des revendications 1 à 9, **caractérisé par le fait que,** dans un programme, les phases de messages, qui passent par plusieurs commutateurs, sont synchronisées par utilisation du temps global de sorte qu'un temps de transport *de bout en bout* (*« end*-*to*-*end »*) minimal du message est atteint par le système de communication global.

11. Procédé selon l'une des revendications 1 à 10, **caractérisé par le fait que** les différentes périodes dans un programme se trouvent dans une relation harmonique entre elles, de sorte que la période la plus longue est le plus petit multiple commun de toutes les périodes.

12. Procédé selon l'une des revendications 1 à 11, **caractérisé par le fait qu'**une période remarquable de l'ensemble des périodes harmoniques correspond à la seconde physique.

13. Procédé selon l'une des revendications 1 à 12, **caractérisé par le fait qu**'une période remarquable de l'ensemble des périodes harmoniques correspond exactement à un intervalle de temps qui est prédéterminé par une application.

14. Procédé selon l'une des revendications 1 à 13, **caractérisé par le fait que,** dans un ensemble de commutateurs reliés entre eux, lesquels possèdent une base de temps globale commune, les moments de commutation des programmes sont simultanés dans tous les commutateurs.

15. Procédé selon l'une des revendications 1 à 14, **caractérisé par le fait que** les moments de commutation sont choisis de sorte que, pour des messages qui se produisent dans un programme actif et nouveau avec la même période, aucun déphasage n'est causé par la commutation.

16. Procédé selon l'une des revendications 1 à 15, **caractérisé par le fait que** le commutateur vérifie si les messages classés comme critiques pour la sécurité dans un nouveau programme sont incorporés conformément aux exigences critiques pour la sécurité et, et si tel n'est pas le cas, le commutateur ne procède à aucune commutation d'un programme actif à un nouveau programme et envoie un message d'erreur à un système de diagnostic.

17. Procédé selon l'une des revendications 1 à 16, **caractérisé par le fait que** les messages répondent à la norme SAE AS6802 de TT Ethernet, ou les messages répondent à la norme IEEE 1588 *pour la Synchronisation d'Horloges de Précision* (« *for Précision Clock Synchronization* »)*.*

18. Commutateur destiné à être utilisé dans un procédé selon l'une des revendications 1 à 17, dans lequel le commutateur est conçu de sorte qu'il désactive un programme actif et active un nouveau programme à un moment de commutation défini dans un intervalle actif d'une *base de temps distribuée* (« *sparse time base* »).

19. Système en temps réel destiné à mettre en oeuvre un procédé selon l'une des revendications 1 à 17.
